# FASCICULE DE BREVET EUROPEEN

(11) **EP 0 770 286 B1**
(45) Date de publication et mention de la délivrance du brevet: **26.03.2003**
(21) Numéro de dépôt: 96916182.7
(22) Date de dépôt: 10.05.1996
(51) Int. Cl.: H04B 3/54, H04L 12/56, H04L 29/06

(54) **PROCEDE ET DISPOSITIF DE TRANSMISSION ENTRE UNE PLURALITE D'UNITES LOCALES CONNECTEES A DIFFERENTS RESEAUX DE DISTRIBUTION DE COURANT ELECTRIQUE**
VERFAHREN UND VORRICHTUNG ZUR ÜBERTRAGUNG ZWISCHEN EINER VIELZAHL VON AN UNTERSCHIEDLICHEN ELEKTRISCHEN VERSORGUNGSNETZEN ANGESCHLOSSENEN LOKALEN EINHEITEN
METHOD AND DEVICE FOR TRANSMITTING INFORMATION BETWEEN A PLURALITY OF LOCAL UNITS CONNECTED TO DIFFERENT ELECTRICITY DISTRIBUTION NETWORKS

(30) Priorité: 12.05.1995 FR 9505749
(43) Date de publication de la demande: 02.05.1997
(73) Titulaire: Duranton, René, F-78510 Triel sur Seine (FR)
(72) Inventeur: Duranton, René, F-78510 Triel sur Seine (FR)
(74) Mandataire: de Saint-Palais, Arnaud Marie
(86) Numéro de dépôt international: FR9600702
(87) Numéro de publication internationale: WO96036133

(56) Documents cités:
- EP-A- 0 088 862
- WO-A-95/01030
- FR-A- 2 674 996
- US-A- 4 642 607

## Description

La présente invention concerne un procédé et un dispositif pour la transmission d'informations entre une pluralité d'unités locales connectées à différents réseaux de distribution de courant électrique, et utilisant les lignes de distribution électrique pour transmettre ces informations par courant porteur modulé.

On sait qu'il a déjà été proposé notamment par les brevets FR 2 674 996, EP-A-0 088 862 et la demande WO-A-95 0103 des dispositifs de transmission à courant porteur, la demande WO-A- 95 0103 s'appliquant à un télé-relevé de compteurs, et le brevet EP-A-0 088 862 estimant qu'une modulation de phase est préférable à une modulation d'amplitude et de phase pour des vitesses de modulation supérieures à 1000 bauds. Le brevet FR 2 674 996 s'applique quant à lui à la gestion d'appareils électriques à l'intérieur d'une habitation.

US-4 642 607 A décrit un procédé pour la transmission d'informations entre plusieurs unités locales connectées à plusieurs réseaux de distribution électrique, comprenant la transmission d'informations par courant porteur à une fréquence éloignée de celle du réseau, ainsi que la transmission d'informations entre réseaux par couplage.

Or, la distribution du courant électrique dans une zone géographique, par exemple une zone urbaine, est organisée de manière hiérarchique, la zone comprenant un ensemble de transformateurs alimentés en courant haute tension, chacun alimentant un réseau de distribution basse tension. Chaque réseau basse tension est donc indépendant, les informations que l'on peut envoyer dans un réseau ne peuvent donc pas être transmises aux autres réseaux de distribution sans utiliser un autre moyen de communication, tel que par exemple le réseau téléphonique qui présente un coût élevé par ligne à multiplier par le nombre de réseaux de distribution à interconnecter.

Par ailleurs, chaque réseau devant pouvoir être mis hors tension séparément pour pouvoir y effectuer des travaux, sans qu'il soit nécessaire de mettre hors tension tous les autres réseaux d'une zone. L'indépendance des réseaux de distribution d'électricité doit donc être strictement respectée pour des raisons de maintenance et de sécurité.

C'est pourquoi il est impensable à l'heure actuelle d'interconnecter les réseaux de distribution de manière à assurer la transmission des informations d'un réseau à l'autre.

En outre, s'il est connu d'utiliser les fils d'alimentation électrique pour transmettre des informations à l'échelle d'un bâtiment, voire même d'un unique réseau électrique, comme décrit dans le brevet FR-A-2 674 996, une telle utilisation est peu envisageable à l'échelle d'une zone urbaine pour de nombreuses raisons.
Tout d'abord, il est difficile de connaître les impédances de charge des lignes de distribution d'électricité, lesquelles peuvent varier de manière importante en fonction des éléments raccordés au réseau électrique.

Ensuite, le taux d'atténuation des signaux de transmission d'information par courant porteur est très variable en fonction de la position de l'émetteur sur le réseau électrique. Par ailleurs, on peut observer un parasitage au niveau du courant porteur qui peut être important, et donc qui peut perturber les transmissions d'informations utilisant ce moyen.
Pour ces différentes raisons, il est difficile de déterminer une portée minimum de transmission. Les différents émetteurs et récepteurs doivent donc être espacés d'une distance inférieure à cette portée minimale.

La présente invention a pour but de surmonter ces problèmes. A cet effet, elle propose un procédé pour la transmission d'informations entre une multiplicité d'unités locales connectées à plusieurs réseaux de distribution de courant électrique indépendants les uns des autres, la transmission des informations s'effectuant par courant porteur modulé à une fréquence de porteuse éloignée de la fréquence du courant distribué.

Ce procédé est caractérisé en ce que lesdits réseaux sont électriquement isolés l'un de l'autre de manière à ce que l'un des deux réseaux puisse être mis hors tension sans qu'il soit nécessaire de mettre hors tension le deuxième, et en ce que la transmission des informations d'un réseau à l'autre s'effectue grâce à un dispositif de couplage à isolation galvanique conservant l'isolation électrique entre les deux réseaux de manière à obtenir un réseau de transmission de données présentant une topologie complexe comportant de nombreuses intersections réparties aléatoirement.
Ainsi, le procédé selon l'invention va à l'encontre du préjugé qui vise à maintenir absolument l'indépendance des réseaux de distribution d'électricité, en couplant les réseaux les uns aux autres pour permettre la transmission d'informations, tout en garantissant l'isolation électrique des réseaux les uns par rapport aux autres.

Selon une particularité de l'invention, les informations sont transmises par le réseau sous la forme de messages comprenant chacun une indication sur l'émetteur et le destinataire du message permettant de déterminer le chemin de transfert du message entre l'émetteur et le destinataire, le procédé selon l'invention comprenant en outre la détection par chaque unité locale des messages transitant sur le réseau de distribution auquel elle est connectée, et la répétition par l'unité locale de chaque message détecté si elle se trouve sur le chemin de transfert du message.

De cette manière, on s'affranchit de la portée réduite des transmissions d'informations par courant porteur, tout en évitant de saturer le réseau.

Un mode de réalisation du procédé selon l'invention sera décrit ci-après, à titre d'exemple non limitatif, avec référence aux dessins annexés dans lesquels :
La figure 1 représènte schématiquement un réseau de distribution électrique auquel sont raccordés des modules conçus pour communiquer entre eux et avec un poste central ;
La figure 2 montre le schéma électrique d'un module ;
La figure 3 montre un circuit d'émission et de réception de messages numériques sur le réseau de distribution électrique ;
La figure 4 montre le schéma électrique d'un dispositif de couplage selon l'invention ;
La figure 5 montre la structure de l'adresse de chaque module ;
La figure 6 est une représentation schématique d'une portion de réseau illustrant le mode d'adressage des modules ;
La figure 7 donne l'algorithme de détermination de l'adresse d'un module ;
La figure 8 montre la structure des messages échangés par les modules via le réseau électrique ;
La figure 9 donne l'algorithme exécuté par chaque module qui reçoit un message pour déterminer s'il doit ou non répéter le message ;
La figure 10 montre une représentation schématique générale d'un réseau électrique utilisé en tant que moyen de communication ;

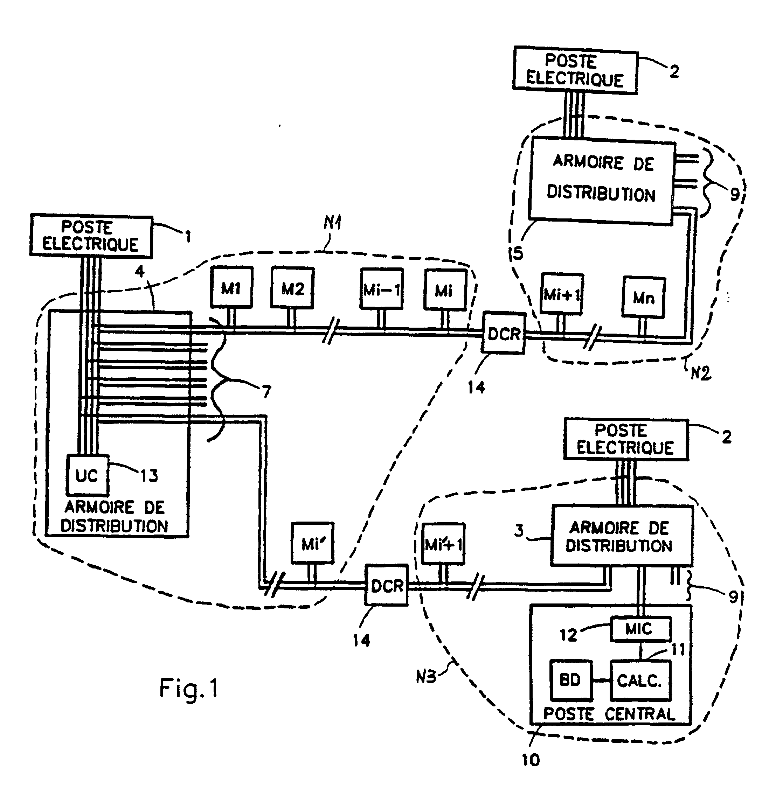

La figure 1 montre une pluralité de réseaux de distribution électrique N1,N2,N3 délimités par des traits interrompus, alimentés par un certain nombre de postes électriques 1,2 permettant de transformer l'électricité haute tension reçue en basse tension (220 V) triphasée, pour alimenter un ensemble d'armoires de distribution électrique 3,4,5. Chaque armoire 3,4,5 distribue une tension de 220 V monophasée à un certain nombre de lignes 7,8,9, chaque ligne servant à alimenter par exemple, des abonnés ou un ensemble de candélabres servant à l'éclairage public.

Selon l'invention, l'ensemble de ces réseaux N1,N2,N3 peut être utilisé en tant que réseau de communication entre un poste central 10 raccordé à une armoire de distribution électrique 3, et une pluralité de modules M₁,M₂, ...M ᵢ...M ₙ connectés aux différentes lignes issues des différentes armoires électriques 3,4,5. A cet effet chaque module Mᵢ est conçu pour émettre et recevoir des informations bidirectionnellement par courant porteur, en modulation de phase, utilisant une porteuse de fréquence éloignée, supérieure à 100 kHz, de la fréquence du courant distribué (50 ou 60 Hz). La porteuse utilisée est par exemple à la fréquence de 132 kHz.

Le poste central 10 est équipé d'un calculateur 11, couplé au réseau électrique N3 par l'intermédiaire d'un module d'interface 12 qui assure la transmission d'informations entre le calculateur 11 et le réseau électrique.
Chaque armoire de distribution, par exemple 4, comprend une unité de couplage 13 permettant d'établir la continuité de la transmission d'informations entre le réseau triphasé et les différentes lignes électriques 7,8,9, et notamment à orienter les informations en provenance du poste central 10 vers l'une ou l'autre des lignes alimentées par l'armoire de distribution.

Par ailleurs, étant donné que chaque réseau de distribution électrique N1,N2,N3 est isolé sur le plan électrique, on utilise un dispositif de couplage 14 de réseau qui assure la transmission des informations d'un réseau à l'autre, sans pour autant interconnecter les différents réseaux sur le plan du courant distribué.

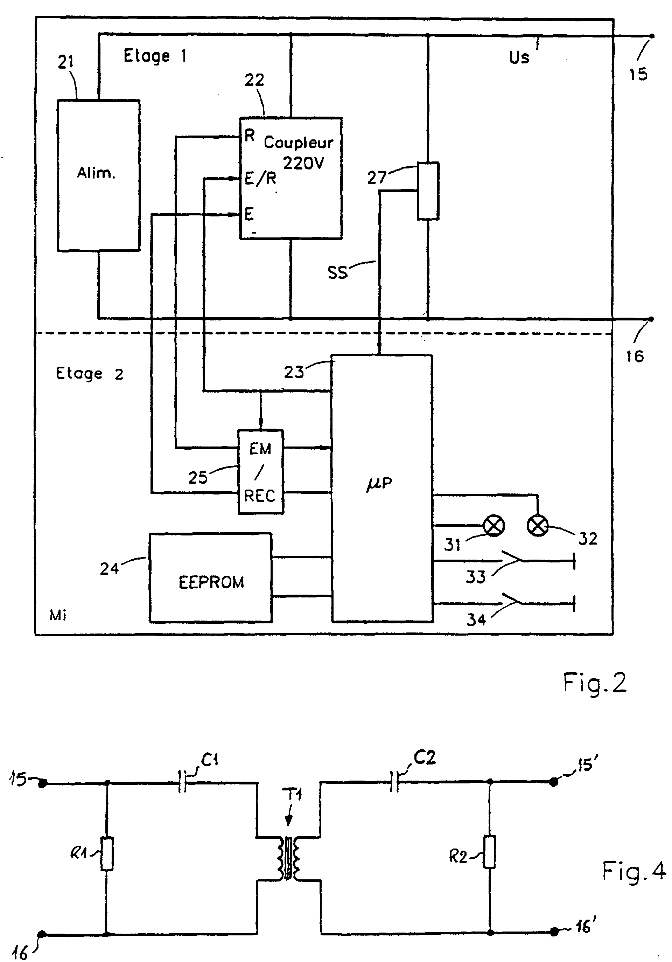

Sur la figure 2, un module Mᵢ comprend au moins deux étages, à savoir :
- un premier étage assurant l'alimentation du module Mᵢ, son couplage au réseau de distribution d'électricité, et la génération d'un signal de synchronisation à partir de la tension Us fournie par le réseau électrique, et
- un second étage organisé autour d'un microprocesseur 23 assurant le pilotage de l'ensemble du module.

Le premier étage comprend :
- un circuit d'alimentation 21 qui, à partir de la tension Us entre la phase 15 et le neutre 16, fournit les tensions d'alimentation nécessaires aux différents organes du module Mᵢ,
- un circuit de couplage 22 connecté entre la phase 15 et le neutre 16, conçu pour assurer l'échange d'informations entre le microprocesseur 23 et le réseau électrique, et
- un circuit de synchronisation 22 également connecté entre la phase 15 et ne neutre 16, conçu pour engendrer un signal logique SS synchrone de la tension électrique Us fournie par le réseau électrique, ce signal logique SS étant appliqué sur une entrée du microprocesseur 23.

Le circuit de couplage 22 peut être réalisé à l'aide d'un transformateur ou d'un circuit résonnant de type LC calé sur la fréquence de la porteuse de transmission des messages par courant porteur.

Le second étage, ou étage de commande, comprend, autour du microprocesseur 23:
- une mémoire EEPROM 24 permettant de sauvegarder des informations, notamment les informations liées à la configuration du module Mᵢ,
- un circuit d'émission / réception 25 conçu pour moduler les informations à émettre, fournies par le microprocesseur 23, et envoyer le signal ainsi obtenu au circuit de couplage 22, et pour démoduler et amplifier les signaux d'information transmis par le circuit de couplage 22, et délivrer les informations ainsi obtenues au microprocesseur 23,

Par ailleurs, le microprocesseur 23 est connecté à deux voyants, un voyant rouge 31 de signalisation des défauts, et un voyant vert 32 pour la signalisation des états de fonctionnement. Il est également connecté à un bouton 33 de marche/arrêt, et un bouton 34 qui permet de déclencher un mode de calcul d'adresse, lors de l'installation du module.

Comme précédemment mentionné, le microprocesseur 23 communique avec le poste central 10 par messages transmis par courant porteur, en modulation de phase, par exemple à une fréquence de 132 kHz, via le réseau de distribution électrique.

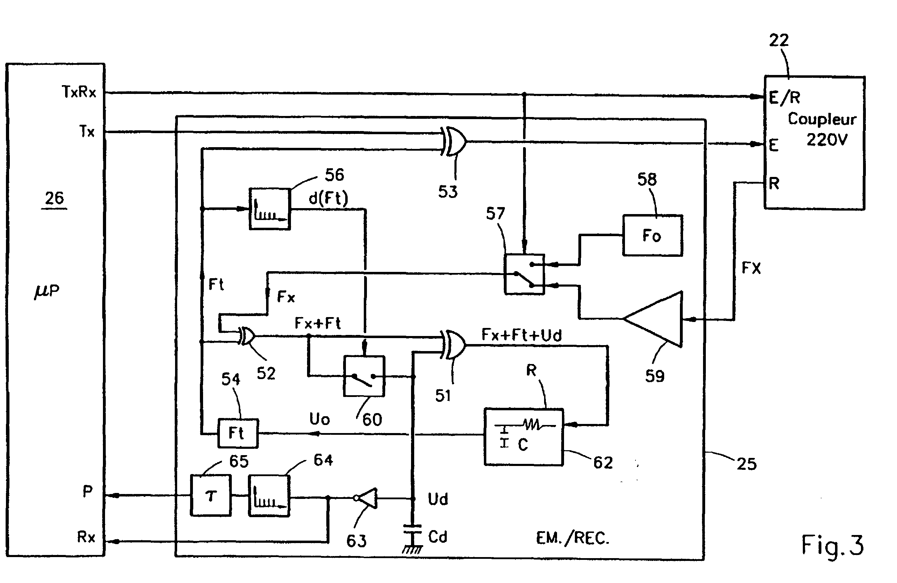

Pour réaliser une telle fonction, le circuit d'émission / réception 25 représenté sur la figure 3, est constitué par exemple, d'un modulateur / démodulateur à modulation de phase, du type asynchrone synchronisé, comprenant par exemple, une première porte OU EXCLUSIF 53 qui combine une porteuse Fₜ avec le signal des données à émettre en provenance de la borne de connexion Tₓ du microprocesseur 23, et délivre un signal modulé en phase ou en opposition de phase avec la porteuse en fonction du niveau logique 0 ou 1 de la donnée numérique à émettre.

La sortie de la porte 53 est reliée circuit de couplage 22 qui est soit positionné en émission, soit en réception grâce à un signal TₓRₓémis par le microprocesseur 23 et appliqué à l'entrée E/R du circuit de couplage 22.
Lorsque le circuit de couplage 22 est positionné en émission, il présente une impédance de sortie faible, de l'ordre de quelques Ohms. Il permet également de filtrer le signal émis pour le transformer en un signal sinusoïdal.

La porteuse Fₜ est obtenue grâce à un oscillateur 54 contrôlé en fréquence et en phase par une boucle d'asservissement appliquant une tension de commande U₀ en entrée de l'oscillateur 54. Cette boucle d'asservissement comprend :
- une porte OU EXCLUSIF 52 dont une entrée est reliée à la sortie de l'oscillateur 54,
- un échantillonneur-bloqueur constitué par un générateur d'impulsions 56 qui commande un interrupteur 60 dont l'entrée est connectée à la sortie de la porte 52, et qui permet de charger un condensateur C_{d} relié à la masse,
- une porte OU EXCLUSIF 51 dont les entrées sont connectées aux sorties de la porte 52 et de l'interrupteur 60, et
- un filtre-intégrateur 62 présentant une constante de temps RC, relié à la sortie de la porte 51, et fournissant le signal de commande U₀.

Le générateur d'impulsions 56 délivre un signal d(Fₜ) constitué d'une impulsion à chaque front du signal Fₜ en entrée, c'est-à-dire, deux impulsions par période du signal Fₜ. Lorsque l'interrupteur 60 est ouvert entre deux impulsions du signal d(Fₜ), la tension aux bornes du condensateur C_{d} reste bloquée au niveau logique 0 ou 1 de la dernière valeur de la tension prélevée par l'interrupteur 60 lorsque celui-ci a été fermé durant une impulsion fournie par le générateur 56.

Par ailleurs le signal TₓRₓsert également à commander un commutateur 57 qui permet de sélectionner soit le signal de données Fₓ reçu par le circuit de couplage 22, soit un signal F₀ engendré par un oscillateur 58, de préférence piloté par un quartz. Ce signal F₀ présente une tension rectangulaire périodique ayant une fréquence constante, égale à celle de la porteuse.

Le signal F₀ ou Fₓ sélectionné par le commutateur 57 est envoyé à l'entrée de la porte OU EXCLUSIF 52. La boucle d'asservissement permet ainsi de caler la fréquence et la phase du signal Fₜ délivré par l'oscillateur 54, à l'émission, sur celles du signal F₀, et à la réception, sur celles du signal reçu Fₓ.

A l'émission, le commutateur 57 est positionné par le signal TₓRₓ de façon à appliquer le signal de sortie F₀ de l'oscillateur 58 sur une entrée de la porte 52. Le signal F₀ étant constant, le signal Fₜ engendré par l'oscillateur 54 est lui aussi constant, ainsi que le signal d(Fₜ) engendré par le générateur d'impulsions 6 et qui vient commander l'interrupteur 10.
Ainsi, le signal passant par l'interrupteur 60 vient charger au niveau logique 0 ou 1 le condensateur C_{d}, ce qui bloque la tension aux bornes du condensateur au niveau logique 0 ou 1 du dernier échantillon prélevé jusqu'à l'échantillon suivant. Le filtre 62 permet d'obtenir une tension U₀ de commande de l'oscillateur 54 de manière à ce que le signal Fₜ corresponde en fréquence au signal F₀.

Le signal Tₓ émis par le microprocesseur 23 commence par un bit de début pour permettre au destinataire de ce signal de lever l'incertitude sur la phase initiale du signal. En réception, la valeur de ce bit de début pourra être exploitée pour déterminer s'il faut inverser ou non la valeur des bits suivants contenus dans le signal reçu.

Il résulte de la table de vérité de la fonction OU EXCLUSIF que pendant les intervalles de temps où le signal Tₓ de données émis par le microprocesseur 23 est au niveau logique 0, la tension en sortie de la porte 53 correspond en forme et en phase exactement à la porteuse Fₜ. Lorsque le signal Tₓ de données est au niveau logique 1, le signal Fₜ+Tₓ en sortie de la porte 53 correspond en forme et en phase à la porteuse Fₜ déphasée de 180° (inversion de phase).

En réception, le circuit de couplage 22 est positionné en réception par le signal TₓRₓ, il présente alors une impédance d'entrée élevée, de l'ordre de quelques centaines d'Ohms, de manière à transmettre le signal de données Fₓ du réseau électrique à un amplificateur 59 qui effectue également un filtrage des fréquences parasites circulant sur le réseau de distribution électrique. Le commutateur 7 est positionné par le signal TₓRₓ de façon à appliquer le signal Fₓ à l'entrée de la porte 52.

La porte OU EXCLUSIF 52 combine alors la porteuse avec le signal reçu Fₓ, pour obtenir un signal Fₜ +Fₓ au niveau logique 0 ou 1 suivant que le signal reçu Fₓ est en phase ou en opposition de phase avec la porteuse Fₜ, le signal Fₜ+Fₓ étant introduit dans la boucle d'asservissement décrite ci-avant.

L'échantillonneur-bloqueur constitué par le générateur 56 qui commande l'interrupteur 60, ainsi que le condensateur C_{d} permet de remettre le signal reçu Fₓ à phase constante par rapport à la fréquence Fₜ, et fournit au microprocesseur 23 le signal démodulé U_{d} disponible aux bornes du condensateur C_{d}. Ce signal démodulé est appliqué par l'intermédiaire d'un inverseur 63, d'une part à l'entrée Rₓ des données reçues du microprocesseur 23, et d'autre part à l'entrée P de détection de la porteuse du microprocesseur 23, au travers d'un générateur d'impulsions 64 et d'un circuit à constante de temps 65. De cette manière, lors de la détection de la porteuse, le microprocesseur 23 peut se mettre en attente d'un signal sur son entrée Rₓ.

L'emploi d'un échantillonneur-bloqueur permet donc d'effectuer une démodulation très rapide du signal reçu. Ainsi la vitesse de transmission numérique exprimée en kilo-bits par seconde, peut théoriquement atteindre la vitesse de la porteuse.

Ainsi, par exemple, avec une fréquence de porteuse égale à 135 kHz, ce circuit peut émettre et recevoir un signal numérique à la vitesse de 90 Kilo-bits par seconde.

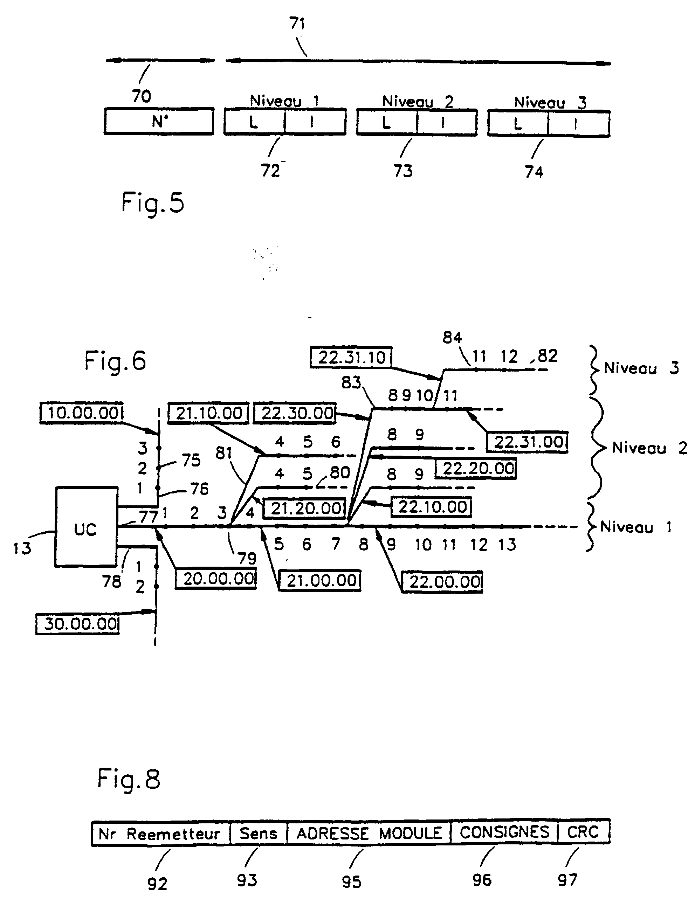

La figure 4 montre un exemple de dispositif de couplage 14 comprenant un transformateur T1, de préférence à ferrite torique et à spires isolées, comportant deux enroulements de même nombre de spires et connectés respectivement aux liaisons bifilaires 15,16 et 15',16' à coupler.
Un tel transformateur permet d'assurer une bonne isolation galvanique entre les deux réseaux couplés (jusqu'à 2500 volts), et ce avec un niveau de sécurité suffisant.

Un condensateur C1,C2 monté en série entre chaque phase 15, 15' et le transformateur T1 permet d'éviter un court-circuit entre la phase et le neutre de chaque liaison bifilaire 15,16 et 15',16'. La valeur des condensateurs C1,C2 est choisie de manière à ce qu'à la fréquence du courant d'alimentation électrique distribué (par exemple 50 Hz), il présente une impédance élevée, tandis qu'à la fréquence de la porteuse de transmission d'informations (132 kHz) son impédance soit faible. Les condensateurs C1,C2 peuvent par exemple présenter une capacité de 0,1 µF.

Une résistance R1,R2 peut être prévue entre la phase 15,15' et le neutre 16,16' de chaque liaison filaire à coupler pour des raisons de sécurité, pour permettre aux condensateurs C1,C2 de se décharger en cas de déconnexion du dispositif de couplage 14.

Le couplage des réseaux électriques N1,N2,N3 réalisé grâce aux dispositifs de couplage 14 permet aboutit à un réseau de transmission de données présentant une topologie complexe comportant de nombreuses intersections réparties aléatoirement. Il est donc avantageux de prévoir un mode d'adressage des différents modules que l'on veut faire communiquer, qui puisse s'appliquer à n'importe quelle topologie de réseau.

Ainsi, chaque module. connecté à un réseau électrique est repéré par rapport à la première unité de couplage 13, dite de référence, située sur le chemin en direction du poste central 10, par une adresse constituée d'un numéro d'ordre 70 et d'un numéro de liaison 71 (figure 5).
Le numéro d'ordre 70 de chaque module Mᵢ, par exemple, sur un octet, correspond au nombre de modules plus un situés entre l'unité de couplage 13 de référence et le module Mᵢ.
Le numéro de liaison permet à chaque module de déterminer le chemin qui le relie à son unité de couplage de référence.

Ainsi, la figure 6 montre l'unité de couplage 13 connectée à trois lignes principales 76,77,78 auxquelles sont raccordés des modules représentés par des points, tel que 75, sur les lignes, chaque point étant associé à un numéro représentant le numéro d'ordre 70 du module.
Les modules connectés directement à l'unité de couplage 13 portent un numéro d'ordre égal à 1, les modules suivants un numéro d'ordre égal à 2, et ainsi de suite jusqu'à l'extrémité de chaque ligne principale.

Lorsque l'on rencontre une intersection, telle que 79 sur la ligne principale 77, d'où partent des lignes secondaires 80,81, tous les modules reliés directement à l'intersection portent le même numéro d'ordre, à savoir 4 dans l'exemple de la figure 6, les modules suivants sur chaque ligne étant numérotés à partir de ce numéro d'ordre. Ainsi, le numéro d'ordre 70 d'un module représente le nombre de modules plus 1, situés entre le module considéré et l'unité de couplage 13.

Le numéro de liaison 71 d'un module Mᵢ permet de repérer le tronçon de ligne (entre deux intersections) auquel est connecté le module, et de déterminer le chemin reliant le module à l'unité de couplage 13, ce numéro tenant compte de toutes les intersections se trouvant entre le module et l'unité de couplage. Ainsi, cette adresse 71 est constituée, par exemple, de trois champs 72 à 74 ou niveaux, de deux octets chacun, le premier octet indiquant un numéro de ligne L, et le second octet un numéro d'intersection I.

Les numéros de liaison des différents tronçons de ligne sont indiqués sur la figure 6 dans des cadres, comme celui portant la référence 85.

Le premier niveau 72 donne le numéro de la ligne principale 76,77,78 à laquelle est relié le module, et le nombre d'intersections situées entre l'unité de couplage 13 et le module sur la ligne principale. Si les numéros de ligne L et d'intersection I du second niveau 73 sont différents de zéro, ils indiquent respectivement le numéro de ligne secondaire à laquelle est relié le module et nombre d'intersections rencontrées sur la ligne secondaire en direction de l'unité de couplage 13. De la même façon, le numéro de ligne du troisième niveau 74 permet de numéroter les lignes 82 qui partent d'une ligne secondaire 83.

Ainsi, par exemple le module 84 portant l'adresse 11-22.31.10 est le onzième module en partant le l'unité de couplage 13 sur le chemin qui le relie à celle-ci. Il est connecté à la ligne secondaire numéro 1 qui est reliée à l'intersection numéro 1 de la ligne secondaire numéro 3, laquelle est reliée à l'intersection numéro 2 de la ligne principale 77 numéro 2.

Ce mode d'adressage d'un module permet ainsi de localiser n'importe quel module raccordé au réseau, et de déterminer le chemin qui le relie à l'unité de couplage 13.

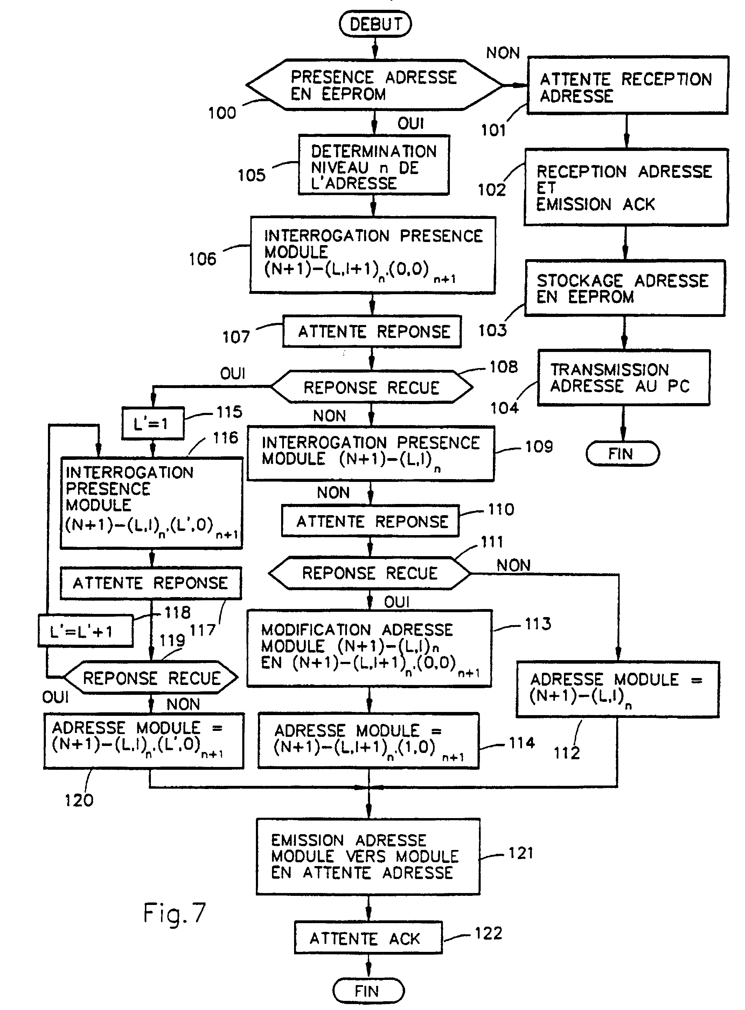

Si l'on souhaite interconnecter un nombre important de modules, l'adressage des différents modules doit pouvoir être effectué sans manipulations fastidieuses qui entraînent des risques d'erreur importants.
A cet effet, l'adresse des modules est déterminée automatiquement. A cet effet, comme précédemment mentionné, chaque module comprend un mode de calcul d'adresse qui est déclenché grâce au bouton 34. Lors de l'installation d'un module Mᵢ, il suffit de presser ce bouton 34 ainsi que celui du module situé en amont par rapport à l'unité de couplage 13, ou bien le bouton correspondant de l'unité de couplage 13 si le module à installer se trouve immédiatement en aval de celle-ci. Cette opération active l'exécution d'un programme par le microprocesseur 23 dont l'algorithme est représenté sur la figure 7.

Ce programme commence par tester si la mémoire EEPROM 24 contient l'adresse du module (étape 100). Si aucune adresse de module n'est détectée, on se trouve dans la situation d'un module Mᵢ pour lequel on cherche à déterminer l'adresse. Dans ce cas, le module Mᵢ se met en attente temporisée de réception d'un message d'installation contenant une adresse (étape 101). Si le module Mᵢ reçoit un tel message dans un certain délai, il émet un signal d'accusé de réception (étape 102), stocke l'adresse reçue dans la mémoire 24 (étape 103), et émet un message de fin d'installation de module contenant l'adresse reçue en direction du poste central 10 pour avertir celui-ci qu'un module portant cette adresse vient d'être installé (étape 104).

Lorsque le calculateur 11 du poste central 10 reçoit un message de fin d'installation d'un module, il crée un nouvel enregistrement dans la base de données BD contenant l'adresse de module reçue, et invite l'opérateur à compléter cet enregistrement, notamment avec des informations de localisation géographique du module.

Dans le cas où une adresse de module figure dans la mémoire 24 (étape 100), on se trouve dans le cas d'un module Mᵢ₋₁ déjà affecté à une adresse et situé immédiatement en amont du module Mᵢ que l'on veut installer. Le module Mᵢ₋₁ peut représenter l'unité de couplage 13 affectée arbitrairement à l'adresse 0-00.00.00, dans le cas où l'on veut installer le module M₁ situé immédiatement en aval de l'unité de couplage 13.
Le module Mᵢ₋₁ détermine alors à quel niveau n il se trouve en examinant les champs à 0 de l'adresse lue dans la mémoire 24 (étape 105). L'adresse lue du module présente la forme suivante (N)-(L,I)ₙ.(0,0)ₙ₊₁, N étant le numéro d'ordre du module, et (L,I)ₙ le numéro de liaison du niveau n le plus élevé non nul. Le module Mᵢ₋₁ émet ensuite un message d'interrogation de présence vers un module dont l'adresse est égale à (N+1)-(L,I+1)ₙ.(0,0)ₙ₊₁ (étape 106), ce qui correspond à un module Mᵢ situé immédiatement en aval du module Mᵢ₋₁ et d'une intersection, puis il se met en attente d'une réponse avec temporisation (étape 107).

Si aucune réponse n'est reçue dans le délai (étape 108), cela signifie qu'aucun module ne porte l'adresse indiquée dans le message d'interrogation, et donc qu'aucune intersection n'a été repérée immédiatement en aval du module Mᵢ₋₁. Le module Mᵢ₋₁ émet alors un message d'interrogation de présence vers un module portant l'adresse (N+1)-(L,I)ₙ.(0,0)ₙ₊₁ (étape 109), ce qui correspond à un module situé immédiatement en aval, sans intersection intermédiaire. Il se met ensuite en attente d'une réponse avec temporisation (étape 110). Si aucune réponse n'est reçue dans le délai (étape 111), cela signifie qu'aucun module déjà installé ne se trouve en aval sur la ligne. L'adresse du module que l'on cherche à calculer est donc égale à (N+1)-(L,I)ₙ.(0,0)ₙ₊₁.

Si une réponse est reçue lors de l'étape 111, cela signifie qu'il existe déjà un module portant l'adresse (N+1)-(L,I)ₙ.(0,0)ₙ₊₁, et donc que l'on vient de détecter une nouvelle intersection. Par conséquent, il convient de modifier l'adresse du module qui a répondu, et qui doit être égale à (N+1)-(L,I+1)ₙ.(0,0)ₙ₊₁ (étape 113). Par ailleurs, l'adresse du module recherchée est égale à (N+1)-(L,I+1)ₙ .(1,0)ₙ₊₁ (étape 114).

Dans le cas où une intersection a déjà été détectée immédiatement en aval du module Mᵢ₋₁ (étape 108), il convient d'interroger tous les modules situés immédiatement en aval pour déterminer quel numéro de ligne du niveau n+1 affecter au module Mᵢ à installer.
Pour cela, le module Mᵢ₋₁ émet un message d'interrogation vers le module portant l'adresse (N+1)-(L,I+1)ₙ.(L',0)ₙ₊₁, avec L'=1 (étapes 115, 116), puis se met en attente avec temporisation d'une réponse (étape 117). Si une réponse est reçue dans le délai (étape 119), le module émet un message vers le module suivant (avec L'=2) (étapes 118, 116 et 117), et ainsi de suite, jusqu'à ce que le module ne reçoive pas de réponse dans le délai. Lorsqu'aucune réponse n'est reçue, l'adresse recherchée est égale à (N+1)-(L,I+1)ₙ.(L',0)ₙ₊₁ correspondant à l'adresse contenue dans le dernier message d'interrogation envoyé (étape 120).

Une fois que l'adresse recherchée du module Mᵢ à installer a été déterminée, le module Mᵢ₋₁ émet un message d'installation contenant cette adresse vers le module Mᵢ à installer (étape 121); et se met en attente d'un accusé de réception (étape 122) qui est émis lors de l'étape 102.

L'adressage de tous les modules est ainsi effectué automatiquement, de proche en proche, en partant de l'unité de couplage 13.

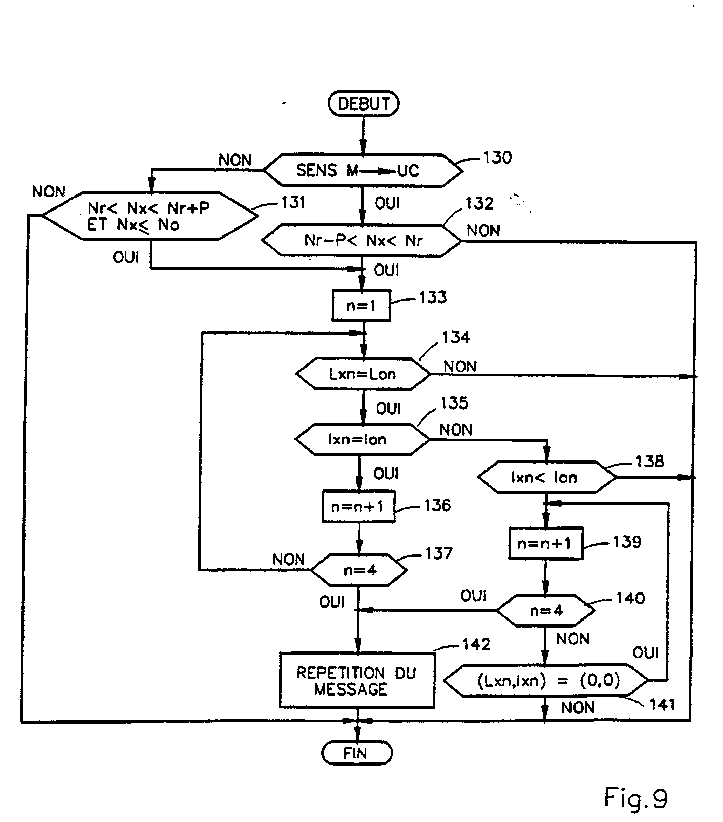

Sur la figure 8, chaque message transitant sur le réseau comprend :
- le numéro d'ordre 92 du dernier module réémetteur sur un octet,
- le sens du transfert 93 sur un octet, à savoir, 0 pour les messages destinés aux modules Mᵢ, et 1 pour les messages destinés au poste central 10,
- l'adresse 95 du module émetteur ou destinataire du message en fonction du sens 93, sur 4 octets,
- les consignes 96 ou informations à transmettre sur 3 octets, et
- un mot de somme de contrôle 97 sur 2 octets permettant de vérifier que le contenu du message a été correctement transmis.

Grâce à cette structure un message transitant sur le réseau peut être répété par les différents modules Mᵢ du réseau, de manière à s'affranchir de la portée limitée (quelques centaines de mètres) des transmissions par courant porteur. Une telle opération est avantageusement effectuée selon l'algorithme représenté sur la figure 9.

Chaque module X d'adresse Nₓ-(Lₓₙ,Iₓₙ)ₓ qui détecte un message sur le réseau commence par déterminer s'il est le destinataire du message en lisant les champs sens et si le sens est égal à 0, le champ adresse du module destinataire. S'il n'est pas destinataire du message, le module va déterminer s'il doit ou non répéter le message.
Si le message est destiné au poste central (étape 130), et si le numéro d'ordre Nₓ du module n'est pas compris entre Nᵣ, le numéro d'ordre du dernier module répéteur R ou l'émetteur du message, et Nᵣ - P, P étant un pas fonction de la distance entre les modules, par exemple fixé à 5 (étape 132), alors le module X ne doit pas répéter le message. Il en est de même si le message est destiné à un module O d'adresse Nₒ-(Lₒₙ,Iₒₙ)ₙ, si le numéro d'ordre Nₓ du module X n'est pas compris entre Nᵣ, et Nᵣ + P, et si Nₓ > Nₒ, c'est-à-dire si le module X se trouve en aval du module destinataire O (étape 131).
En fait, l'utilisation du pas P permet d'éviter que systématiquement tous les modules situés sur un chemin de transmission répètent le message, de manière à réduire les risques de saturation du réseau.

Dans le cas contraire (étapes 131 et 132), il s'agit de comparer pour chaque niveau n d'adresse, en commençant par le niveau 1 (étape 133), les champs (Lₓₙ,Iₓₙ) de l'adresse du module X avec les champs correspondants (Lₒₙ ,Iₒₙ) du module émetteur ou destinataire O contenu dans le message.

Si Lₓₙ est différent de Lₒₙ, c'est-à-dire, si le module X se trouve sur une ligne différente de celle du module O (étape 134), alors le module X ne doit pas répéter le message. Dans le cas contraire, trois cas peuvent se présenter (étapes 135 et 138) : soit les numéros d'intersection des modules X et O sont identiques (Iₓₙ = Iₒₙ), soit Iₓₙ > Iₒₙ, soit Iₓₙ < Iₒₙ.

Dans le premier cas, aucune intersection ne se trouve entre le module X et le module O, et le module X répète les étapes 134 et 135 pour les niveaux supérieurs (étapes 136 et 137).

Dans le second cas, le module X ne se trouve pas sur le chemin de transmission du message et le module X ne doit pas répéter le message.

Dans le troisième cas, c'est-à-dire, si au moins une intersection se trouve entre les supérieurs sont nuls (étapes 139, 140 et 141). Si tel n'est pas le cas, cela signifie que les modules X et O se trouvent sur des branches différentes. Le module X ne doit donc pas répéter le message.

Dans le cas où le module X se trouve sur le chemin reliant le module O à l'unité de couplage 13, le module X exécute l'étape 142 de répétition du message. Cette étape 142 consiste pour le module X, à répéter immédiatement le message si l'écart entre son numéro d'ordre Nₓ et celui du module répéteur R est égal à P-1 (|Nₓ-Nᵣ| = P-1).
Le module suivant de numéro d'ordre N, situé juste après le module X, entre ce dernier et le module répéteur R (|N-Nᵣ| = P-2), attend avec une temporisation que le module X répète le message, et répète le message si le délai est écoulé. Si le module suivant n'a pas répété le message dans un certain délai, c'est alors au module qui suit dans la direction du module répéteur R (|N-Nᵣ| = P-3) de le répéter, et ainsi de suite jusqu'au module répéteur R.
Lorsque le message a été répété par un module, celui-ci transmet un accusé de réception au module répéteur précédent.
Par ailleurs, avant de répéter un message, le module X calcule la somme de contrôle contenu dans le message et la compare avec la valeur du champ somme de contrôle 97 du message. Si une différence est constatée, le message n'est pas répété. Constatant alors qu'aucun accusé de réception n'a été envoyé dans un certain délai, le dernier module répéteur ou l'émetteur du message répète le message.
De cette manière, on obtient une grande sécurité dans la transmission des informations.
Le module X qui répète un message, inscrit au préalable son numéro d'ordre dans le champ 92 prévu à cet effet dans le message.

En pratique, chaque poste électrique 12, est associé à une unité de couplage 13 installée dans une armoire de distribution électrique 4,5.

Chaque unité de couplage possède une structure analogue à celle des modules, à la différence qu'elles comprennent un circuit de couplage 220 V pour chaque phase du secteur triphasé, et sont susceptibles d'émettre et recevoir sélectivement des messages sur chacune des trois phases.

Chaque unité de couplage 13 définit une zone comprenant tous les modules situés sur les lignes en aval de l'unité de couplage par rapport au poste central 10, une unité de couplage se situant sur la limite entre deux zones et étant numérotée comme un module dans la zone amont. Dans une zone, tous les modules sont numérotés à partir de l'unité de couplage amont définissant la zone, en partant de l'adresse 0-00.00.00 pour l'unité de couplage.

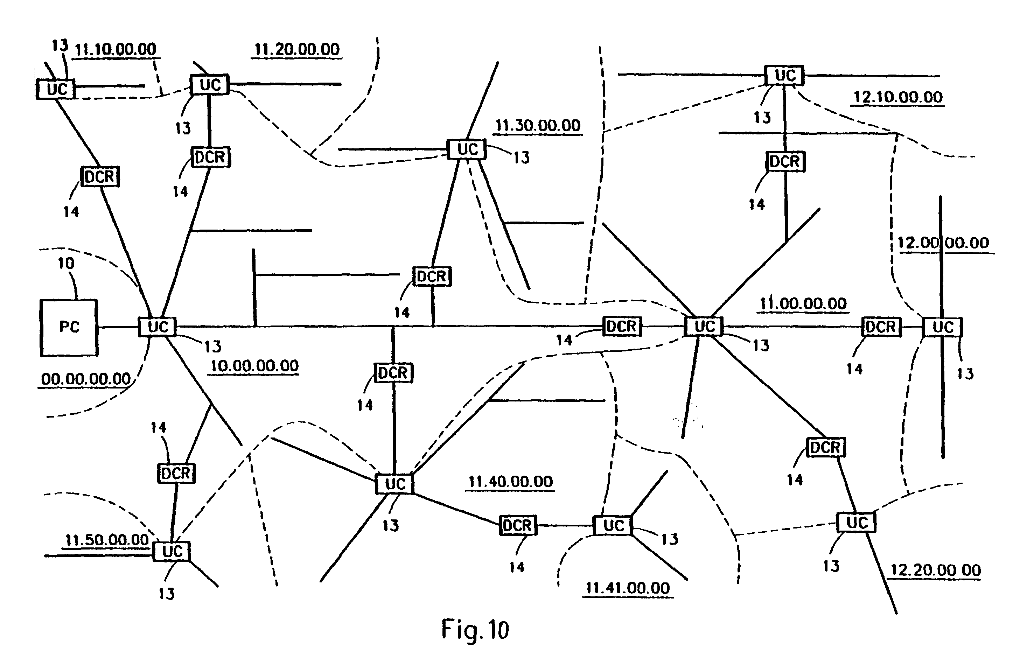

La figure 10 montre un réseau de transmission d'informations en étoile constitué par une pluralité de réseaux de distribution de courant électrique, et dont le noeud central correspond au poste central 10. Ce réseau comprend une pluralité de zones correspondant aux réseaux de distribution auxquels on a ajouté les liaisons avales des dispositifs de couplage 14 avec les unités de couplage 13.

Avantageusement, tel que représenté sur cette figure, les zones sont numérotées de la même façon que les lignes d'une zone, par exemple sur quatre niveaux, les unités de couplage correspondant aux intersections dans la numérotation des lignes.

Ainsi, toutes les zones situées sur une ligne principale sont numérotées à partir du poste central 10, 00.00.00.00, 10.00.00.00, 12.00.00.00 ..., 00.00.00.00 étant la zone incluant le poste central 10.

Les messages échangés entre les modules Mᵢ et le poste central 10 comprennent alors un champ supplémentaire contenant le numéro de la zone et l'adresse de module de l'unité de couplage 13 suivantes à atteindre pour accéder au destinataire, l'adresse du module émetteur ou destinataire (suivant le sens) étant complété par le numéro de la zone dans laquelle se trouve le module.
A chaque changement de zone, lorsque qu'un message est reçu par une unité de couplage 13, le champ supplémentaire du message est mis à jour par l'unité de couplage 13 avec le numéro de la zone suivante et l'adresse de module de l'unité de couplage suivante à atteindre pour que le message arrive à destination.

Pour pouvoir assurer le routage des messages, chaque unité de couplage 13 mémorise une table associant chaque zone limitrophe de la zone définie par l'unité de couplage, à l'adresse de module de l'unité de couplage qui définit la zone.

De cette manière, un nombre quasiment illimité de modules peut être adressé et communiquer avec le poste central 10 sans installation de lignes de communication spécialisées.

## Revendications

1. Procédé pour la transmission d'informations entre une multiplicité d'unités locales (Mᵢ) connectées à plusieurs réseaux de distribution de courant électrique indépendants les uns des autres, la transmission des informations s'effectuant par courant porteur modulé à une fréquence de porteuse éloignée de la fréquence du courant distribué,
**caractérisé en ce que** lesdits réseaux sont électriquement isolés l'un de l'autre de manière à ce que l'un des deux réseaux puisse être mis hors tension sans qu'il soit nécessaire de mettre hors tension le deuxième et **en ce que** la transmission des informations d'un réseau à l'autre s'effectue grâce à un dispositif de couplage à isolation galvanique conservant l'isolation électrique entre les deux réseaux de manière à obtenir un réseau de transmission de données présentant une topologie complexe comportant de nombreuses intersections réparties aléatoirement.

2. Procédé selon la revendication 1,
**caractérisé en ce que** la fréquence de la porteuse de transmission est supérieure à 100 kHz.

3. Procédé selon la revendication 1 ou 2,
**caractérisé en ce que** les informations sont transmises par courant porteur bidirectionnel modulé en phase à 132 kHz.

4. Procédé selon l'une des revendications précédentes,
**caractérisé en ce que** les informations sont transmises sous la forme de messages comprenant chacun une indication sur l'émetteur et le destinataire du message permettant de déterminer le chemin de transfert du message entre l'émetteur et le destinataire, le procédé comprenant en outre la détection par chaque unité locale (Mᵢ) des messages transitant sur le réseau de distribution auquel elle est connectée, et la répétition par l'unité locale de chaque message détecté si elle se trouve sur le chemin de transfert du message.

5. Procédé selon l'une des revendications précédentes,
**caractérisé en ce que** les dispositifs de couplage (14) sont disposés de manière à réaliser un réseau de transmission d'informations en étoile constitué par les réseaux de distribution couplés par les dispositifs de couplage (14), le réseau de transmission comprenant un noeud central constitué par un poste central (10), le procédé comprenant en outre l'affectation à chaque unité locale (M ᵢ) d'une adresse comprenant un numéro d'ordre (70) représentant le nombre d'unités locales situées entre un noeud prédéterminé (13) du réseau et l'unité locale (M ᵢ), et un numéro de liaison (71) permettant de déterminer le chemin reliant chaque unité locale au noeud prédétenminé (13).

6. Procédé selon la revendication 5,
**caractérisé en ce qu'**il comprend pour chaque unité locale (Mᵢ) détectant un message :
- la réception du message par l'unité locale (Mᵢ),
- la détermination par l'unité locale (Mᵢ) du chemin reliant l'émetteur au récepteur grâce aux informations (92,95) sur les adresses de l'émetteur et du destinataire du message, et
- la répétition du message par l'unité locale (Mᵢ) si celle-ci se trouve sur le chemin du réseau de transmission reliant l'émetteur au destinataire, et si le message n'a pas déjà été répété par une autre unité locale, les informations (92,95) sur l'adresse de l'émetteur du message étant au préalable remplacées par celles relatives à l'adresse de l'unité locale (Mᵢ).

7. Procédé selon la revendication 6,
**caractérisé en ce que** la répétition d'un message est effectuée en priorité par l'unité locale (Mᵢ) située sur le chemin reliant l'émetteur au destinataire du message, et séparé de l'émetteur par un nombre (P) prédéterminé d'unités locales, puis successivement par les unités locales suivantes en direction de l'émetteur, si l'unité locale précédente n'a pas répété le message.

8. Procédé selon l'une des revendications 5 à 7,
**caractérisé en ce que** chaque réseau de distribution électrique est constitué d'une armoire électrique alimentant en tension un ensemble de lignes principales auxquelles sont connectées les unités locales (Mᵢ), et **en ce que** le procédé comprend en outre la transmission des informations d'une ligne à l'autre dudit ensemble de lignes grâce à une unité de couplage (13) installée au niveau de l'armoire de distribution, et conservant l'isolation galvanique entre les lignes, le numéro de liaison (71) de l'adresse de chaque unité locale (Mᵢ) comportant un premier champ (72) comprenant un numéro de la ligne (L) principale qui fait partie du chemin reliant l'unité locale (Mᵢ) au poste central (10) et qui est reliée directement à la première unité de couplage (13) en partant de l'unité locale (Mᵢ) en direction du poste central (10), et un numéro d'intersection (I) donnant le nombre d'intersections de la ligne principale avec des lignes secondaires, situées entre l'unité de couplage (13) et l'unité locale (Mᵢ).

9. Procédé selon la revendication 8,
**caractérisé en ce que** le numéro de liaison (71) de l'adresse d'une unité locale (Mᵢ) comporte au moins un second champ (73) comprenant un numéro ligne (L) secondaire connectée à l'intersection dont le numéro est donné par le numéro d'intersection du champ précédent (72), et un numéro d'intersection (I) donnant le nombre d'intersections de la ligne secondaire avec d'autres lignes secondaires, situées entre le début de la ligne secondaire et l'unité locale (Mᵢ).

10. Procédé selon la revendication 8 ou 9,
**caractérisé en ce que** chaque unité de couplage (13) définit une zone comprenant toutes les unités locales situées en aval de l'unité de couplage (13) par rapport au poste central (10), l'adresse de chaque unité locale (Mᵢ) d'une même zone étant définie par rapport à l'unité de couplage (13) définissant la zone, chaque unité de couplage (13) étant associée à une adresse d'unité locale dans la zone amont par rapport au poste central (10), chaque zone étant associée à une adresse permettant à une unité locale (Mᵢ) d'être localisée sans risque d'erreur par rapport au poste central (10), par une adresse de zone et une adresse d'unité locale dans la zone.

11. Procédé selon la revendication 10,
caractérisé en ce l'adresse d'une zone est construite de la même façon qu'une adresse d'unité locale, les intersections entre zones étant constituées par les unités de couplage (13).

12. Procédé selon l'une des revendications précédentes,
**caractérisé en ce que** chaque unité locale (Mᵢ) est reliée directement à une autre unité locale (Mᵢ₋₁) unique, dit amont, en direction d'une unité de couplage (13), l'unité locale amont (Mᵢ₋₁) pouvant être constituée par l'unité de couplage (13), le procédé comprenant une phase d'adressage automatique des unités locales (Mᵢ) au cours de laquelle l'adresse de chaque unité locale (Mᵢ) est déterminée par l'unité locale amont (Mᵢ₋₁) déjà associée à une adresse, ladite phase comprenant pour chaque unité locale (Mᵢ) :
- la mise de l'unité locale (Mᵢ) en attente d'un message d'installation contenant une adresse,
- la détection par l'unité locale amont (Mᵢ₋₁) du nombre d'unités locales avales déjà associées à une adresse et qui lui sont reliés directement,
- le calcul par l'unité locale amont (Mᵢ₋₁) de l'adresse de l'unité locale (Mᵢ) en attente, à partir de l'adresse de l'unité locale amont (Mᵢ₋₁) et du nombre d'unités locales avales détectées,
- la transmission par l'unité locale amont (Mᵢ₋₁) à l'unité locale aval (Mᵢ) en attente, d'un message d'installation contenant l'adresse ainsi calculée, et le stockage en mémoire de l'adresse reçue par l'unité locale (M) en attente.

13. Ensemble pour la mise en oeuvre du procédé selon l'une des revendications précédentes,
**caractérisé en ce qu'**il comprend, au moins deux réseaux électriques de distribution de courant électriquement isolés l'un de l'autre et comprenant une pluralité d'unités locales (Mi) comportant chacune des moyens (22, 23, 25) pour émettre et recevoir des messages véhiculés sur le réseau par courant porteur bidirectionnel modulé en phase, un dispositif de couplage à isolation galvanique reliant les deux réseaux en des points quelconques de manière à assurer la transmission des messages d'un réseau à l'autre tout en assurant une isolation galvanique entre les deux réseaux, et un poste central (10) couplé à l'un des réseaux de manière à communiquer avec chaque unité locale (Mi) dudit ensemble.

14. Ensemble selon la revendication 13,
**caractérisé en ce que** les moyens (22, 23,25) pour communiquer avec le poste central (10) sont conçus de manière à émettre et recevoir des messages par courant porteur, en modulation de phase, à une fréquence de 132 kHz.

15. Ensemble selon la revendication 13 ou 14,
**caractérisé en ce que** les moyens (22, 23,25) pour communiquer avec le poste central (10) sont conçus pour recevoir tous les messages véhiculés par la ligne électrique (15,16), et pour répéter les messages qui ne leur sont pas destinés.'

16. Ensemble selon l'une des revendications 13 à 15,
**caractérisé en ce que** le poste central (10) comprend un calculateur (11) connecté au réseau électrique par l'intermédiaire d'un module d'interface (12) permettant le transfert de données entre le calculateur (11) et le réseau électrique, et à une base de données (BD) où sont stockées les informations concernant chaque module (Mi) connecté au réseau, ces informations comprenant notamment l'adresse du module associée à des informations de localisation géographique du module.

17. Ensemble selon l'une des revendications 13 à 16,
**caractérisé en ce que** les dispositifs de couplage (14) comprennent un transformateur ne laissant passer que la fréquence de la porteuse de transmission des informations.

18. Ensemble selon l'une des revendications 13 à 17,
**caractérisé en ce que** les moyens (22,23,25) pour émettre et recevoir comprennent un circuit modulateur / démodulateur à modulation de phase du type asynchrone synchronisé, capable de transmettre des données numériques à l'aide d'une porteuse (Fₜ) en forme de créneaux, ce circuit comprenant une première porte OU EXCLUSIF (53) sur laquelle sont appliqués en entrée, la porteuse (Fₜ) et le signal (Tₓ) contenant les données à transmettre, et dont la tension de sortie est en phase ou en opposition de phase avec la porteuse (Fₜ) en fonction du niveau logique 1 ou 0 de la donnée émise ; et une seconde porte OU EXCLUSIF (52) sur laquelle sont appliqués en entrée, la porteuse (Fₜ) et le signal reçu (Fₓ), et dont la tension de sortie est au niveau logique 0 ou 1 suivant que le signal reçu (Fₓ) est en phase ou en opposition de phase avec la porteuse (Fₜ).

19. Ensemble selon la revendication 18,
caractérisé en ce le circuit modulateur / démodulateur comprend en outre :
- un oscillateur (54) engendrant la porteuse (Fₜ) et dont la phase est commandée par une tension (U₀ ), de manière à être synchrone en fréquence et en phase en émission, avec un signal de (F₀) engendré par un oscillateur (58), et en réception, avec le signal (Fₓ) reçu ; et
- un échantillonneur-bloqueur auquel est appliqué le signal issu de la seconde porte OU EXCLUSIF (52), conçu pour prélever des échantillons du signal issu de l'oscillateur commandé en phase (54), à une fréquence double de celle de la porteuse (Fₜ), et délivrer une tension de sortie qui reste bloquée au niveau logique 0 ou 1 du dernier échantillon prélevé, de manière à démoduler le signal (Fₓ) de transmission de données numériques reçu.

20. Ensemble selon la revendication 19,
**caractérisé en ce que** l'oscillateur commandé en phase (54) est contrôlé en phase par une tension (U₀) fournie par une boucle d'asservissement comprenant:
- la seconde porte OU EXCLUSIF (52),
- l'échantillonneur-bloqueur,
- une troisième porte OU EXCLUSIF (51), et
- un filtre intégrateur (62).

## Claims

1. Method for transmitting information between a multiplicity of local units (M ᵢ) connected to several independent electric current networks, the transmission of information being effected by carrier current modulated at a carrier frequency distant from the frequency of the current distributed, **characterised in that** said networks are electrically isolated from each other so that one of the two networks can be out of operation without it being necessary to put the second out of operation and **in that** the transmission of information from one network to the other is effected by means of a galvanic isolation coupling device preserving electric isolation between the two networks so as to obtain a data transmission network having a complex topology comprising a large number of intersections distributed randomly.

2. Method according to claim 1, **characterised in that** the frequency of the transmission carrier is greater than 100 kHz.

3. Method according to claim 1 or 2, **characterised in that** the information is transmitted by bidirectional carrier current in phase-modulated at 132 kHz.

4. Method according to one of the preceding claims, **characterised in that** the information is transmitted in the form of messages each containing an indication concerning the transmitter and the addressee of the message making it possible to determine the transfer path of the message between the transmitter and the addressee, the method further including the detection by each local unit (Mᵢ) of the messages transiting on the distribution network to which it is connected and the repetition by the local unit of each detected message if it is located on the message transfer path.

5. Method according to one of the preceding claims, **characterised in that** the coupling devices (14) are arranged so as to embody a star-shaped information transmission network constituted by the distribution networks coupled by the coupling devices (14), the transmission network including a central node constituted by a central station (10), the method further including the allocation to each local unit (M ᵢ) of an address including an order number (70) representing the number of local units situated between a predetermined node (13) of the network and the local unit (M ᵢ) and a linking number (71) able to determine the path connecting each local unit to the predetermined node (13).

6. Method according to claim 5, **characterised in that** it includes for each local unit (Mi) detecting a message:
- receiving of the message by the local unit (Mi),
- determination by the local unit (Mi) of the path connecting the transmitter to the addressee by means of information (92, 95) concerning the addresses of the transmitter and the addressee of the message, and
- the repetition of the message by the local unit (Mi) if the latter is located on the path of the transmission network linking the transmitter to the addressee and if the message has not already been repeated by another local unit, the information (92, 95) on the address of the transmitter of the message being previously replaced by information relating to the address of the local unit (Mi).

7. Method according to claim 6, **characterised in that** the repetition of the message is carried out as a priority by the local unit (Mi) located on the path linking the transmitter to the addressee of the message and separated from the transmitter by a predetermined number (P) of local units, then successively by the following local units in the direction of the transmitter if the preceding local unit has not repeated the message.

8. Method according to one of claims 5 to 7, **characterised in that** each electric distribution network is constituted of an electric cabinet supplying voltages to a set of main lines to which the local units (Mi) are connected, and **in that** the method moreover comprises the transmission of information from one line to another from said set of lines by means of coupling unit (13) installed at the level of the distribution cabinet and preserving galvanic insulation between the lines, the connection number (71) of the address of each local unit (Mi)) comprising a first field (72) including a number of the main line (L) which forms part of the path connecting the local unit (Mi) to the central station (10) and which is directly connected to the first coupling unit (13) starting from the local unit (Mi) in the direction of the central station (10), and an intersection number (I) giving the number of intersections of the main line with secondary lines situated between the coupling unit (13) and the local unit (Mi).

9. Method according to claim 8, **characterised in that** the connection number (71) of the address of a central unit (Mi) comprises at least one second field (73) comprising a secondary line number (L) connected to the intersection whose number is given by the intersection number of the preceding field (72), and an intersection number (I) giving the number of intersections of the secondary line with other secondary lines situated between the start of the secondary line and the local unit (Mi).

10. Method according to claim 8 or 9, **characterised in that** each coupling untt (13) defines a zone comprising all the local units located downstream of the coupling unit (13) with respect to the central station (10), the address of each local unit (Mi) of a given zone being defined with respect to the coupling unit (13) defining the zone, each coupling unit (13) being associated with a local unit address in the upstream zone with respect to the central station (10), each zone being associated with a permanent address at a local unit (Mi) making it possible for the local unit (Mᵢ) to be precisely localised with respect to central station (10) by a zone address and a local unit address within the zone.

11. Method according claim 10, **characterised in that** a zone is constructed similarly to a local unit address, the intersections between zones being constituted the coupling units (13).

12. Method according to one of the preceding claims, **characterised in that** each local unit (Mᵢ) is directly linked up to another single local unit (Mᵢ-1) known as the upstream in the direction of a coupling unit (13), the upstream local unit (Mᵢ₋₁) being able to be constituted by the coupling unit (13), the method comprising a phase for automatically addressing the local units (Mᵢ) during which the address of each local unit (Mᵢ) is determined by the upstream local unit (Mᵢ₋₁) already associated with an address, said phase including for each central unit (Mᵢ) :
- the central unit (Mᵢ) being placed on stand-for an installation message containing an address,
- detection by the upstream local unit ((Mᵢ₋₁) of the number of downstream units already associated with an address and which are directly connected to it,
- the calculation by the upstream local unit (Mᵢ₋₁) of the address of the local unit (Mᵢ) on stand-by on the basis of the address of the upstream local unit (Mᵢ₋₁) and of the number of detected downstream local units,
- transmission by the upstream local unit (Mᵢ₋₁) to the downstream local unit (Mᵢ) on stand-by of an installation message containing the calculated address, and the storage in a memory the address received by the local unit (M) on stand-by.

13. System for implementing the method according to one of the preceding claims, **characterised in that** it comprises at least two current distribution networks electrically isolated from one another and comprising a plurality of local units (Mᵢ) each comprising means (22, 23, 25) to transmit and receive messages routed on the network by an inphase-modulated bidirectional carrier current, a coupling device with galvanic insulation connecting the two networks at certain points so as to ensure transmission of messages from one network to another whilst ensuring galvanic insulation between the two networks, and a central station (10) coupled to one of the networks so as to communicate with each local unit (Mi) of said system.

14. System according to claim 13, **characterised in that** the means (22, 23, 2() for communicating with the central station (A) are designed so as to transmit and receive messages by carrier current in phase modulation at a frequency of 132 kHz.

15. System according to one of claims 13 to 14, **characterised in that** the means (22, 23, 25) for communicating with the central station (10) are designed to receive all the messages borne by the electric line (15, 16) and for repeating the messages not intended for it.

16. System according to one of claims 13 to 15, **characterised in that** the central station (10) includes a computer (11) connected to the electric network by means of an interface module (12) allowing the transfer of data between the computer (11) and the electric network and to a data base (BD) where the information concerning each module (Mi) connected to the network is stored, this information including in particular the address of the module associated with geographical localisation information of the module.

17. System according to one of claims 13 to 16, **characterised in that** the coupling devices (14) include a transformer only allowing the frequency of the transmission carrier of this information to pass.

18. System according to one of claims 13 to 17, **characterised in that** the means (22, 23, 25) for transmitting and receiving include a modulator/demodulator circuit with phase modulation of the synchronised a synchronous type able to transmit digital data by means of a Garrier wave (F t) in the form of strobes, this circuit comprising a first EXCLUSIVE OR gate (53) to which the carrier wave (Ft) and the signal (Tx) containing the data to be transmitted are applied at the input and whose output voltage is in phase or phase opposition with the carrier wave (Ft) according to the logic level 1 or 0 of the data element transmitted ; and a second OR EXCLUSIVE (52) to which the carrier wave (Ft) and the signal received (Fx) are applied at the input and whose output voltage is at the level 0 or 1 according to whether the signal received (Fx) is in phase or in phase opposition with the carrier wave (Ft).

19. System according to claim 18, **characterised in that** the modulator/demodulator circuit further comprises :
- an oscillator (54) generating the carrier wave (Ft) and whose phase is controlled by a voltage (Uₒ) so as to be synchronous on frequency and on transmission phase with a signal (F₀) generated by an oscillator (58) and on receiving with the received signal (Fx) signal ; and
- a sample and hold to which the signal originating from the second EXCLUSIVE OR gate (52) is applied and designed so as to take samples of the signal originating from the phase-controlled oscillator (54) at a frequency double that of the carrier wave (Ft) and deliver an output voltage which remains inhibited at the logic level 0 or 1 of the last sample taken so as to demodulate the signal (Fx) for transmitting the received digital data.

20. System according to claim 9, **characterised in that** the phase-controlled oscillator (54) is phase-controlled by a voltage (U₀) )supplied by a control loop comprising :
- the second EXCLUSIVE OR gate (52),
- the sample and hold,
- a third EXCLUSIVE OR gate (51), and
- an integrated filter (62).

## Patentansprüche

1. Verfahren für die Übertragung von Informationen zwischen einer Mehrzahl von lokalen Einheiten (Mᵢ), die an mehrere, voneinander unabhängige Stromverteilernetze angeschlossen sind, wobei die Übertragung der Informationen anhand eines Trägerstroms erfolgt, der auf eine Trägerfrequenz moduliert wird, der von der Frequenz des verteilten Stroms weit entfernt ist,
**dadurch gekennzeichnet, dass** die genannten Verteilernetze elektrisch voneinander getrennt sind, so dass eines der beiden Verteilernetze außer Spannung gesetzt werden kann, ohne dass es erforderlich ist, auch das zweite außer Spannung zu setzen, und **dadurch gekennzeichnet, dass** die Übertragung der Informationen von einem Netz zum anderen dank einer Kopplungsvorrichtung mit galvanischer Trennung erfolgt, die die elektrische Trennung zwischen den beiden Verteilernetzen erhält, um ein Datenübertragungsnetz zu bekommen, das eine komplexe Topologie mit einer Vielzahl von zufällig verteilten Schnittpunkten aufweist.

2. Verfahren gemäß Patentanspruch 1,
**dadurch gekennzeichnet, dass** die Frequenz der Trägerwelle für die Übertragung mehr als 100 kHz beträgt.

3. Verfahren gemäß Patentanspruch 1 oder 2,
**dadurch gekennzeichnet, dass** die Informationen anhand eines bidirektionalen, phasenmodulierten Trägerstroms mit 132 kHz übertragen werden.

4. Verfahren gemäß einem der voranstehenden Patentansprüche,
**dadurch gekennzeichnet, dass** die Informationen in Form von Mitteilungen übermittelt werden, die jeweils eine Angabe über den Absender und den Empfänger der Mitteilung enthalten, mit deren Hilfe sich der Transferweg der Mitteilung zwischen Absender und Empfänger bestimmen lässt, wobei das Verfahren darüber hinaus die Feststellung der Mitteilungen, die über das Verteilernetz laufen, durch jede angeschlossene lokale Einheit (Mᵢ) beinhaltet, sowie die Wiederholung jeder festgestellten Mitteilung durch die lokale Einheit, wenn sie sich auf dem Transferweg der Mitteilung befindet.

5. Verfahren gemäß einem der voranstehenden Patentansprüche,
**dadurch gekennzeichnet, dass** die Kopplungsvorrichtungen (14) so angeordnet sind, dass ein sternförmiges Informationsübertragungsnetz erzeugt wird, das aus den Verteilernetzen besteht, die anhand der Kopplungsvorrichtungen (14) zusammengekoppelt sind, wobei das Übertragungsnetz einen zentralen Knoten beinhaltet, der aus einer Zentraleinheit (10) besteht, wobei das Verfahren darüber hinaus die Zuordnung einer Adresse zu jeder lokalen Einheit (Mᵢ) beinhaltet, wobei die Adresse eine laufende Nummer (70) enthält, die die Anzahl der lokalen Einheiten angibt, die zwischen einem vorgegebenen Knoten (13) des Netzes und der lokalen Einheit (M₂) angeordnet sind, und eine Verbindungsnummer (71), die die Bestimmung des Weges ermöglicht, der jede lokale Einheit mit dem vorgegebenen Knoten (13) verbindet.

6. Verfahren gemäß Patentanspruch 5,
**dadurch gekennzeichnet, dass** es für jede lokale Einheit (Mᵢ), die eine Mitteilung feststellt, folgendes beinhaltet:
- den Empfang der Mitteilung durch die lokale Einheit (Mᵢ),
- die Bestimmung des Weges, der den Sender mit dem Empfänger verbindet, durch die lokale Einheit (Mᵢ) dank der Informationen (92, 95) über die Adressen des Absenders und des Empfänngers der Mitteilung, und
- die Wiederholung der Mitteilung durch die lokale Einheit (Mᵢ), wenn sich diese auf dem Weg des Übertragungsnetzes befindet, das den Sender mit dem Empfänger verbindet, und wenn die Mitteilung nicht bereits von einer anderen lokalen Einheit wiederholt worden ist, werden die Informationen (92, 95) über die Adresse des Absenders der Mitteilung vorab durch diejenigen über die Adresse der lokalen Einheit (Mᵢ) ersetzt.

7. Verfahren gemäß Patentanspruch 6,
**dadurch gekennzeichnet, dass** die Wiederholung einer Mitteilung vorrangig durch die lokale Einheit (Mᵢ) erfolgt, die sich auf dem Weg zwischen dem Sender und dem Empfänger der Mitteilung befindet und vom Sender anhand einer vorgegebenen Anzahl (P) von lokalen Einheiten getrennt ist, und sodann nacheinander durch die nachfolgenden lokalen Einheiten in Richtung des Senders, wenn die vorherige lokale Einheit die Mitteilung nicht wiederholt hat.

8. Verfahren gemäß einem der Patentansprüche 5 bis 7,
**dadurch gekennzeichnet, dass** jedes Stromverteilernetz aus einem Schaltschrank besteht, der eine Reihe von Hauptleitungen mit Spannung versorgt, an welche die lokalen Einheiten (Mᵢ) angeschlossen sind, und **dadurch gekennzeichnet, dass** das Verfahren darüber hinaus die Übertragung der Informationen einer Leitung an die andere der genannten Reihe von Leitungen mithilfe einer Kopplungseinheit (13) beinhaltet, die im Bereich des Schaltschranks installiert ist und die galvanische Trennung zwischen den Leitungen erhält, wobei die Verbindungsnummer (71) der Adresse jeder lokalen Einheit (Mᵢ) ein erstes Feld (72) mit einer Nummer der Hauptleitung (L) enthält, die Teil des Weges zwischen der lokalen Einheit (Mᵢ) und der Zentraleinheit (10) ist und die direkt an die erste Kopplungseinheit (13) nach der lokalen Einheit (Mᵢ) in Richtung Zentraleinheit (10) angeschlossen ist, und eine Schnittpunktnummer (I), die die Anzahl der Schnittpunkte der Hauptleitung mit den Nebenleitungen zwischen der Kopplungseinheit (13) und der lokalen Einheit (Mᵢ) angibt.

9. Verfahren gemäß Patentanspruch 8,
**dadurch gekennzeichnet, dass** die Verbindungsnummer (71) der Adresse einer lokalen Einheit (Mᵢ) mindestens ein zweites Feld (73) beinhaltet, das eine Nummer der Nebenleitung (L) enthält, die an die Schnittstelle angeschlossen ist, deren Nummer durch die Schnittstellennummer des vorherigen Feldes (72) angegeben wird, und eine Schnittstellennummer (I), die die Anzahl der Schnittstellen der Nebenleitung mit anderen Nebenleitungen angibt, die sich zwischen dem Anfang der Nebenleitung und der lokalen Einheit (Mᵢ) befinden.

10. Verfahren gemäß Patentanspruch 8 oder 9,
**dadurch gekennzeichnet, dass** jede Kopplungseinheit (13) eine Zone definiert, die alle lokalen Einheiten beinhaltet, die sich im Verhältnis zur Zentraleinheit (10) unterhalb der Kopplungseinheit (13) befinden, wobei die Adresse jeder lokalen Einheit (Mᵢ) ein und derselben Zone im Verhältnis zur Kopplungseinheit (13) definiert wird, die die Zone definiert, und jede Kopplungseinheit (13) einer Adresse einer lokalen Einheit in der im Verhältnis zur Zentraleinheit (10) oberhalb gelegenen Zone zugeordnet ist, wobei jede Zone einer Adresse zugeordnet ist, die es einer lokalen Einheit (Mᵢ) ermöglicht, ohne Fehlerrisiko im Verhältnis zur Zentraleinheit (10) anhand einer Zonenadresse und einer Adresse einer lokalen Einheit in der Zone lokalisiert zu werden.

11. Verfahren gemäß Patentanspruch 10,
**dadurch gekennzeichnet, dass** die Adresse einer Zone in der gleichen Weise aufgebaut ist, wie die Adresse einer lokalen Einheit, wobei die Schnittpunkte zwischen den Zonen aus den Kopplungseinheiten (13) bestehen.

12. Verfahren gemäß irgendeinem der voranstehenden Patentansprüche,
**dadurch gekennzeichnet, dass** jede lokale Einheit (Mᵢ) direkt an eine einzige, so genannte oberhalb gelegene lokale Einheit (Mᵢ₋₁) in Richtung auf eine Kopplungseinheit (13) angeschlossen ist, wobei die oberhalb gelegene lokale Einheit (Mᵢ₋₁) aus einer Kopplungseinheit (13) bestehen kann, wobei das Verfahren eine Phase der automatischen Adressierung der lokalen Einheit (Mᵢ) beinhaltet, in deren Verlauf die Adresse jeder lokalen Einheit (Mᵢ) von der oberhalb gelegenen lokalen Einheit (Mᵢ₋₁) ermittelt wird, die bereits einer Adresse zugeordnet worden ist, und die genannte Phase für jede lokale Einheit (Mᵢ) folgendes beinhaltet:
- die Versetzung der lokalen Einheit (Mᵢ) in den Wartestand auf eine Installationsmitteilung, die eine Adresse enthält,
- die Ermittlung der Anzahl der unterhalb gelegenen lokalen Einheiten, die bereits einer Adresse zugeordnet worden sind und die direkt an sie angeschlossen sind, durch die oberhalb gelegene lokale Einheit (Mᵢ₋₁),
- die Berechnung der Adresse der lokalen Einheit (Mᵢ) im Wartestand durch die oberhalb gelegene lokale Einheit (Mᵢ₋₁) anhand der Adresse der oberhalb gelegenen lokalen Einheit (Mᵢ₋₁) und die festgestellte Anzahl der unterhalb gelegenen lokalen Einheiten,
- die Übertragung einer Installationsmitteilung mit der auf diese Weise berechneten Adresse durch die oberhalb gelegene lokale Einheit (Mᵢ₋₁) an die unterhalb gelegene lokale Einheit (Mᵢ) und die Speicherung der Adresse, die von der lokalen Einheit (M) im Wartestand eingegangen ist.

13. Baugruppe für die Verwendung des Verfahrens gemäß irgendeinem der voranstehenden Patentansprüche,
**dadurch gekennzeichnet, dass** sie mindestens zwei Stromverteilernetze beinhaltet, die elektrisch voneinander getrennt sind und eine Mehrzahl von lokalen Einheiten (Mᵢ), die jeweils Mittel (22, 23, 25) beinhalten, um Mitteilungen zu senden und zu empfangen, die mittels bidirektional phasenmoduliertem Trägerstrom über das Netz übertragen werden; eine Kopplungsvorrichtung mit galvanischer Trennung, die die beiden Netze an beliebigen Punkten miteinander verbindet, um die Übertragung der Mitteilungen von einem Netz an das andere zu gewährleisten, bei gleichzeitiger Gewährleistung einer galvanischen Trennung zwischen den beiden Netzen; und eine Zentraleinheit (10), die an eines der Netze gekoppelt ist, um mit der lokalen Einheit (Mᵢ) der genannten Baugruppe zu kommunizieren.

14. Baugruppe gemäß Patentanspruch 13,
**dadurch gekennzeichnet, dass** die Mittel (22, 23, 25), um mit der Zentraleinheit (10) zu kommunizieren, so konzipiert sind, dass Mitteilungen per phasenmoduliertem Trägerstrom mit einer Frequenz von 132 kHz gesendet und empfangen werden können.

15. Baugruppe gemäß Patentanspruch 13 oder 14,
**dadurch gekennzeichnet, dass** die Mittel (22, 23, 25) für die Kommunikation mit der Zentraleinheit (10) so konzipiert sind, dass alle Mitteilungen empfangen werden, die über die Stromleitung (15, 16) übertragen werden, und dass die Mitteilungen, die nicht für sie bestimmt sind, wiederholt werden.

16. Baugruppe gemäß Patentanspruch 13 bis 15,
**dadurch gekennzeichnet, dass** die Zentraleinheit (10) einen Rechner (11) beinhaltet, der anhand eines Schnittstellenmoduls (12) an das Stromnetz angeschlossen ist, das den Datentransfer zwischen dem Rechner (11) und dem Stromnetz erlaubt, und an eine Datenbank (DB), in der die Informationen über jedes Modul (Mᵢ) gespeichert sind, das an das Netz angeschlossen ist, wobei diese Informationen insbesondere die Adresse des Moduls in Verbindung mit Informationen über den geographischen Standort des Moduls enthalten.

17. Baugruppe gemäß einem der Patentansprüche 13 bis 16,
**dadurch gekennzeichnet, dass** die Kopplungsvorrichtungen (14) einen Transformator beinhalten, der nur die Frequenz der Trägerwelle für die Übertragung der Informationen passieren lässt.

18. Baugruppe gemäß irgendeinem der Patentansprüche 13 bis 17,
**dadurch gekennzeichnet, dass** die Mittel (22, 23, 25) für das Senden und Empfangen einen Modulator-Demodulator-Schaltkreis mit Phasenmodulation vom synchronisierten, asynchronen Typ beinhalten, der in der Lage ist, digitale Daten anhand einer Trägerwelle (Fₜ) in Form eines Zeitschlitzes zu übertragen, wobei dieser Schaltkreis ein erstes Antivalenzglied (53) beinhaltet, an das am Eingang die Trägerwelle (Fₜ) und das Signal (Tₓ) angelegt werden, das die zu übertragenden Daten enthält und dessen Ausgangsspannung sich phasengleich oder gegenphasig zur Trägerwelle (Fₜ) verhält, abhängig vom logischen Pegel 1 oder 0 der übermittelten Daten; und ein zweites Antivalenzglied (52), an das am Eingang die Trägerwelle (Fₜ) und das empfangene Signal (Fₓ) angelegt werden und dessen Ausgangsspannung den logischen Pegel 0 oder 1 hat, je nachdem ob sich das empfangene Signal (Fₓ) phasengleich oder gegenphasig zur Trägerwelle (Fₜ) verhält.

19. Baugruppe gemäß Patentanspruch 18,
**dadurch gekennzeichnet, dass** der Modulator-Demodulator-Schaltkreis darüber hinaus folgendes beinhaltet:
- einen Oszillator (54), der die Trägerwelle (Fₜ) erzeugt und dessen Phase in der Weise durch eine Spannung (U₀) gesteuert wird, dass sie sich beim Senden frequenz- und phasensynchron zu einem Signal (F₀) verhält, das durch einen Oszillator (58) erzeugt wird, und beim Empfang zu dem empfangenen Signal (Fₓ); und
- eine Abtast-Halte-Schaltung, an die das Signal angelegt wird, das vom zweiten Antivalenzglied (52) stammt, und die so konzipiert ist, dass Abtastproben des Signals aus dem phasengesteuerten Oszillator (54) entnommen werden, mit der doppelten Frequenz der Trägerwelle (Fₜ), und dass eine Ausgangsspannung abgegeben wird, die auf dem logischen Pegel 0 oder 1 der letzten entnommenen Abtastprobe gehalten wird, um das Signal (Fₓ) für die Übertragung der empfangenen digitalen Daten zu demodulieren.

20. Baugruppe gemäß Patentanspruch 19,
**dadurch gekennzeichnet, dass** der phasengesteuerte Oszillator (54) durch eine Spannung (U₀) phasenkontrolliert wird, die von einer Regelschleife abgegeben wird, die folgendes beinhaltet:
- das zweite Antivalenzglied (52),
- die Abtast-Halte-Schaltung,
- ein drittes Antivalenzglied (51) und
- einen Integratorfilter (62).
